# EUROPÄISCHE PATENTSCHRIFT

(11) **EP 1 341 636 B1**
(45) Veröffentlichungstag und Bekanntmachung des Hinweises auf die Patenterteilung: **21.02.2007**
(21) Anmeldenummer: 01270402.9
(22) Anmeldetag: 06.12.2001
(51) Int. Cl.: B23K 9/10, B23K 9/095

(54) **VERFAHREN ZUM VERBINDEN MEHRERER SCHWEISSGERÄTE SOWIE SCHWEISSGERÄT HIERFÜR**
METHOD FOR CONNECTING SEVERAL WELDING DEVICES AND CORRESPONDING WELDING DEVICE
PROCEDE POUR RELIER PLUSIEURS POSTES DE SOUDAGE ET POSTE DE SOUDAGE CORRESPONDANT

(30) Priorität: 15.12.2000 AT 20972000
(43) Veröffentlichungstag der Anmeldung: 10.09.2003
(73) Patentinhaber: Fronius International GmbH, 4643 Pettenbach (AT)
(72) Erfinder: OBERZAUCHER, Friedrich, A-4600 Wels (AT); BRUNNER, Michael, A-8055 Seiersberg (AT)
(74) Vertreter: Secklehner, Günter
(86) Internationale Anmeldenummer: PCT/AT2001/000385
(87) Internationale Veröffentlichungsnummer: WO 2002/047861

(56) Entgegenhaltungen:
- EP-A- 1 086 773
- DE-A- 2 628 385
- US-A- 4 503 316
- US-A- 5 120 929
- US-A- 6 023 037

## Beschreibung

Die Erfindung betrifft ein Verfahren zum Verbinden mehrerer Schweißgeräte, insbesondere mehrerer Schweißstromquellen oder Plasmastromquellen, sowie ein entsprechendes Schweißgerät, wie dies in den Oberbegriffen der Ansprüche 1 und 10 angegeben ist.

Es ist bekannt, Prozeßsteuer- und/oder -regelvorrichtungen für Schweißgeräte, insbesondere für Schweißstromquellen, mit einer Datenschnittstelle auszubilden. Über diese Datenschnittstelle, welche z.B. durch eine standardisierte, serielle Schnittstelle gebildet sein kann, ist es möglich, Daten mit einem übergeordneten Datenverarbeitungsgerät, wie z.B. einer Robotersteuerung auszutauschen. Über diese Standardschnittstelle der Prozeßsteuer- und/oder -regelvorrichtung des Schweißgerätes ist es zudem möglich, Softwareänderungen bzw. Programmupdates vorzunehmen, indem entweder neue Programmdaten oder aktualisierte Softwarekennungen in einem Speicher der Prozeßsteuer- und/oder -regelvorrichtung hinterlegt werden. Weiters ist es bekannt, daß eine derartige Prozeßsteuer- und/oder -regelvorrichtung mehrere an diese angeschlossene Leistungsteile steuern bzw. regeln kann. Verbindungen zwischen mehreren Schweißgeräten bzw. Aufladestromquellen zur Bildung einer einzigen Funktionseinheit, bei welcher mehrere Schweißgeräte in zusammenhängender Kombination betreibbar sind, sind mit den bekannten Ausbildungen nicht möglich.

Aus der DE 199 30 678 A1 ist eine elektronische Leistungsstelleinrichtung, insbesondere als Schweißenergiequelle, bekannt, bei der eine Stromquelle bzw. ein Schweißgerät aus mehreren Modulen aufgebaut wird. Hierzu wird aus mindestens zwei gleichartigen Leistungsteilen und einer Prozeßsteuer- und/oder -regelvorrichtung ein einziges Schweißgerät aufgebaut. Jedes Leistungsteil umfaßt dabei einen eigenen Regelkreis, insbesondere einen U/I-Regler, und weist einen Netzanschluß, einen Prozeßausgang und mindestens einen Steuereingang auf. Die Leistungsteile sind prozeßseitig parallel oder seriell geschaltet und steuerungsseitig an ein vorgeschaltetes Leistungsteil oder an einer übergeordneten Prozeßsteuer- und/oder - regelvorrichtung angeschlossen.

Nachteilig ist hierbei, daß eine Zusammenschaltung derart aufgebauter modularer Schweißgeräte bzw. Stromquellen zu einem physikalischen Schweißgerät oder einer Stromquelle mit höherer Leistung ohne manuellen Eingriff nicht möglich ist, da jedes Schweißgerät oder jede Stromquelle für die Regelung und/oder Steuerung des Prozesses eine eigene Prozeßsteuer- und/oder -regelvorrichtung aufweist. Diese müßte bei einer Zusammenschaltung mehrerer derartiger Schweißgeräte manuell oder elektronisch entfernt bzw. deaktiviert werden, um die weiteren zugeschalteten Leistungsteile von einer übergeordneten Prozeßsteuer- und/oder - regelvorrichtung für einen gemeinsamen Prozeß ansteuern zu können.

Aus dem Dokument DE 26 28 385 A, das sich auf eine Einrichtung zum Lichtbogen- bzw. Plasmaschweißen und/oder Schneiden, insbesondere zum Unterpulverschweißen bezieht, ist ein Schweißgerät bekannt, dessen Stromquelle aus 3 parallel geschalteten Einzelstromquellen gebildet wird. Jede der Einzelstromquellen weist eine Spannungs- bzw. Stromverstellvorrichtung auf, wobei jede Verstellvorrichtung mit dem Ausgang eines Soll-Wert-Ist-Wert-Reglers verbunden ist und ein von einer ersten Einzelstromquelle abnehmbarer Soll-Wert dem Soll-Wert-Eingang der Regler der weiteren Einzelstromquelle zuführbar ist. Als Soll-Wert für die parallel geschalteten Folgestromquellen, der von der Führungsstromquelle an diese weitergegeben wird, dient entweder dieselbe Größe (z.B. Soll-Wert-Potentiometer-Einstellung) oder ein Wert, der sich aus der Stellung oder Beaufschlagung des Stellgliedes (z.B. Stelltransformator, Transduktor, Tyristor-Schaltung) der Führungsstromquelle ableitet.

Der vorliegenden Erfindung liegt die Aufgabe zugrunde, Schweißgeräte bzw. Stromquellen, insbesondere Schweißstromquellen oder Plasmastromquellen, zu schaffen, die als eine funktionelle Einheit betrieben werden können, bzw. ein Verfahren zu entwickeln, mit dem mehrere eigenständige Schweißgeräte bzw. Stromquellen in Kombination als eine einzige Einheit angesprochen bzw. kontrolliert werden können.

Diese Aufgabe der Erfindung wird durch ein Verfahren zum Verbinden bzw. Zusammenschalten mehrerer Schweißgeräte nach Anspruch 1 gelöst. Vorteilhaft ist dabei, daß durch die gekennzeichnete Verbindungsmöglichkeit jedes Leistungsteil der einzelnen, verketteten Schweißgeräte bzw. Stromquellen genutzt werden kann, so daß das Leistungspotential der gesamten Einheit gegenüber einer einzigen Einheit gesteigert werden kann. Ein weiterer Vorteil liegt vor allem darin, daß ohne zusätzliche Verbindungsleitungen außer einem Schnittstellenkabel, wie dies aus dem Stand der Technik bekannt ist, das Auslangen gefunden werden kann, da bei einer derartigen Zusammenschaltung von einem Schweißgerät bzw. einer Stromquelle, insbesondere von dessen Prozeßsteuer- und/oder -regelvorrichtung, die Steuerung und/oder Regelung übernommen wird. Nachdem die Steuerung bzw. Überwachung der Leistungsteile bzw. der Stromquellen in vorteilhafter Weise nur von einer einzigen Prozeßsteuer- und/oder -regelvorrichtung bewerkstelligt wird, können auch keinerlei unerlaubte bzw. undefinierte Zustände auftreten, wie dies insbesondere beim gleichzeitigen Einsatz mehrerer Prozeßsteuer- und/oder -regelvorrichtungen mehrerer Schweißgeräte eintreten kann, sofern keine aufwendigen Validierungsmechanismen implementiert sind. Ein weiterer Vorteil liegt darin, daß von den steuernden bzw. regelnden Komponenten der Schweißgeräte lediglich ein einziges Schweißgerät in Betrieb ist und dadurch eine hohe Stabilität und Funktionssicherheit der gesamten Einheit erzielt wird. Die Steuer- und Prozeßregelvorrichtung ist dabei in der Lage, mehrere Leistungsteile anzusteuern bzw. zu regeln, so daß das Leistungspotential der Vielzahl an Leistungsteilen dennoch genutzt wird.

Ein weiterer bedeutender Vorteil ist dadurch gegeben, daß die Steuerung des Schweißprozesses zentral erfolgen kann und Eingriffe auf den Schweißprozeß an lediglich einem Schweißgerät erforderlich sind, nachdem sich die restlichen Schweißgeräte bzw. Stromquellen automatisch auf die neuen Sollwerte umstellen bzw. anpassen. Bevorzugt werden die zusätzlichen Prozeßsteuer- und/oder -regelvorrichtungen der weiteren Schweißgeräte zwangsweise bzw. automatisch deaktiviert bzw. inaktiv geschaltet, so daß Unachtsamkeiten des Benutzers nicht zu Folgeschäden führen können bzw. keine nachteiligen Auswirkungen nach sich ziehen können. Nachdem die Prozeßsteuer- und/oder -regelvorrichtung unter anderem mit der Ein- und/ oder Ausgabevorrichtung des Schweißgerätes gekoppelt ist und ent sprechend den vom Benutzer einstellbaren Sollwerten die weiteren Komponenten des Schweißgerätes ansteuert bzw. kontrolliert, sind lediglich die Bedienelemente bzw. die Ein- und/oder Ausgabeelemente einer einzigen Stromquelle aktiv, so daß voneinander abweichende Einstellungen an den einzelnen Schweißgeräten von vornherein ausgeschlossen werden können. Dies ist insbesondere bei einer Parallelschaltung mehrerer Schweißgeräte von Vorteil, da dadurch unterschiedliche Spannungsamplituden bei parallel geschalteten Schweißgeräten vermieden werden können. Ein bedeutender Vorteil ist auch dadurch gegeben, daß mehrere Schweißgeräte mit vergleichsweise niedrigen Leistungswerten zu einer leistungsstärkeren Einheit kombiniert werden können. Dies ist insbesondere dann von Vorteil, wenn leistungsstarke und üblicherweise kostenintensivere Schweißgeräte aufgrund geringer Einsatzhäufigkeit für einen Benutzer nicht wirtschaftlich sind, jedoch mehrere Schweißgeräte mit vergleichsweise geringerer Leistung im Einsatz sind, welche dann zu einer entsprechend leistungsstarken Schweißgeräteeinheit kombinierbar sind.

Es sind auch die Maßnahmen nach Anspruch 2 von Vorteil, da dadurch eine abgestimmte bzw. synchronisierte Prozeßregelung der einzelnen Schweißgeräte durchgeführt werden kann und somit unterschiedliche Schweißgerätetypen miteinander gekoppelt werden können.

Durch die Maßnahmen nach Anspruch 3 wird in vorteilhafter Weise erreicht, daß die Sollwerte bzw. die Regel- und/oder Steuersignale auf die erzielbare Energie abgestimmt werden können, wodurch eine einfache Leistungssteuerung der einzelnen Schweißgeräte durchgeführt werden kann.

Vorteilhaft sind auch die Maßnahmen nach Anspruch 4, da dadurch eine gezielte Netzbelastung ermöglicht wird.

Von Vorteil ist auch eine Verfahrensweise nach Anspruch 5, da sämtlichen Leistungsteilen das gleiche elektrische Steuersignal bzw. der jeweilige Sollwert zugeführt wird und gleichzeitig den Leistungsteilen schaltungstechnisch vorgeordnete Vorrichtungen zumindest wirkungsmäßig entkoppelt werden können.

Von Vorteil ist auch ein Vorgehen nach Anspruch 6, da somit durch Zusammenschalten mehrerer Stromquellen bzw. Leistungsteile die Leistungsdaten den individuellen Bedürfnissen angepaßt bzw. die Gesamtleistung gesteigert werden kann.

Durch die Maßnahmen nach Anspruch 7 wird in vorteilhafter Weise erreicht, daß bei unterschiedlich dimensionierten Stromquellen bzw. Leistungsteilen eine Lastaufteilung unter Berücksichtigung der Leistungsgrenzen der entsprechenden Leistungsteile vorgenommen werden kann.

Von Vorteil ist auch ein Vorgehen nach Anspruch 8, da dadurch ein größtmögliches Maß an Sicherheit und Funktionalität erreicht wird und bei Ausfall einer Kontrollvorrichtung bzw. einer Erkennungsvorrichtung die weiteren Kontroll- bzw. Erkennungsvorrichtungen die jeweilige Funktion zumindest teilweise übernehmen können bzw. entsprechende Maßnahmen einleiten können.

Es sind auch die Maßnahmen nach Anspruch 9 von Vorteil, da dadurch die Leistungen, insbesondere die Rechnerleistungen und die Funktionen der weiteren Schweißgeräte vollständig genützt werden können.

Von Vorteil ist auch eine Ausbildung, bei der bei Aktivieren der Schnittstellen und/oder der Verbindungsschnittstelle durch ein Unterbrechungselement die Datenkommunikation zwischen der Prozeßsteuer- und/oder -regelvorrichtung und einem Interface und/oder dem Leistungsteil deaktiviert wird und eine Ausbildung, bei der das Unterbrechungselement softwaremäßig in der Prozeßsteuer- und/oder -regelvorrichtung realisiert wird, da dadurch über die zusätzliche Verbindungsschnittstelle bzw. über eine standardisierte Schnittstelle des Schweißgerätes bzw. der Stromquelle zu weiteren Schweißgeräten bzw. Stromquellen zumindest die Prozeßsteuer- und/oder -regelvorrichtungen dieser weiteren Stromquellen deaktiviert werden können und die Steuerung der Einheit nur von einer einzigen Prozeßsteuer- und/oder -regelvorrichtung der für sich eigenständig voll funktionsfähigen Schweißgeräte bzw. Stromquellen übernommen wird, so daß uneinheitliche Prozeßregelungen bzw. Instabilitäten, wie sie bei einer Prozeßregelung mit mehreren aktiven Reglern auftreten können, ausgeschlossen werden können.

Die Aufgabe der Erfindung wird aber auch eigenständig durch ein Schweißgerät nach Anspruch 10 gelöst.

Ein sich dadurch ergebender Vorteil liegt darin, daß zumindest der Prozeßregelvorrichtung vorgeordnete Vorrichtungen, wie z.B. die Prozeßsteuer- und/oder - regelvorrichtung oder die Ein- und/oder Ausgabevorrichtung bzw. die Bedienelemente, zumindest wirkungsmäßig vom Leistungsteil entkoppelt werden können, so daß wirkungsbezogen vorgeordnete Vorrichtungen in zugeschalteten Schweißgeräten keinen Einfluß nehmen können.

Es ist auch eine Ausgestaltung, wonach das Schweißgerät ein Unterbrechungselement aufweist, mittels dem die Prozeßsteuer- und/oder -regelvorrichtung deaktivierbar ist bzw. eine Ausgestaltung bei der das Unterbrechungselement softwaremäßig in der Prozeßsteuer- und/oder -regelvorrichtung realisiert ist vorteilhaft, da dadurch keinerlei elektrische Schaltvorgänge vorgenommen werden müssen, um die Wirkung nicht benötigter Komponenten bzw. Vorrichtungen zumindest vorübergehend deaktivieren zu können..

Von Vorteil ist auch eine Ausbildung nach Anspruch 11, da dadurch aus mehreren Schweißgeräten ein physikalisches Schweißgerät mit höherer Leistung geschaffen werden kann.

Durch die Ausgestaltung nach Anspruch 12 können die jeweils gültigen Sollwerte oder Steuer- bzw. Regelsignale der aktiven Prozeßsteuer- und/oder -regelvorrichtung direkt den Prozeßregelvorrichtungen bzw. den Leistungsteilen der hinzugeschalteten Schweißgeräte zugeführt werden, so daß diese eigenständig eine den jeweiligen Sollwerten entsprechende Prozeßregelung vornehmen können.

Schließlich ist auch eine Ausbildung nach den Ansprüchen 13 und 14 von Vorteil, da beim Auftreten von Veränderungen an der Schnittstelle bzw. der Verbindungsschnittstelle durch das Verbinden mehrerer Schweißgeräte, über diese Schnittstelle bzw. Verbindungsschnittstellen von den einzelnen Schweißgeräten ein Verbindungs- bzw. Zusammenschaltvorgang erkannt werden kann, woraufhin entsprechende Maßnahmen für einen ordnungsgemäßen

Betrieb der Gesamteinheit automatisch von den einzelnen Schweißgeräten eingeleitet bzw. vorgenommen werden können. Anschaltungen an der Schnittstelle bzw. der Verbindungsschnittstelle der einzelnen Schweißgeräte können also als Anzeichen für eine beabsichtigte Zusammenschaltung mehrerer Schweißgeräte gewertet werden, so daß zusätzliche manuelle Einstell- bzw. Umstelltätigkeiten für einen Benutzer erübrigt werden können.

Die Erfindung wird im nachfolgenden anhand der in den Zeichnungen dargestellten Ausführungsbeispiele näher erläutert.

Es zeigen:
- Fig. 1: einen Aufbau eines Schweißgerätes umfassend die erfindungsgemäße Stromquelle in vereinfachter, schematischer Darstellung;
- Fig. 2: mehrere Schweißgeräte, welche über eine standardisierte Schnittstelle gekoppelt und deren Ausgänge parallel geschaltet sind;

- Fig. 3: mehrere Schweißgeräte, welche über entsprechende Verbindungsschnittstellen gekoppelt und deren Ausgänge in Serie geschaltet sind.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

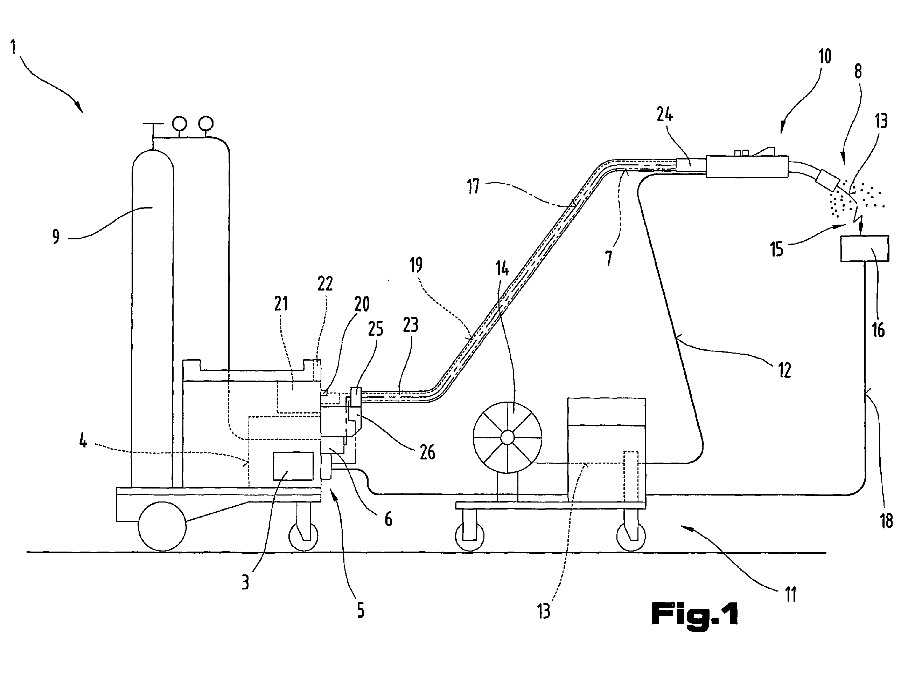

In Fig. 1 ist eine Schweißanlage bzw. ein Schweißgerät 1 für verschiedenste Schweißverfahren wie z.B. MIG/MAG-Schweißen bzw. WIG- oder TIG-Schweißen oder Elektroden-Schweißverfahren gezeigt. Die erfindungsgemäße Lösung kann aber neben der Anwendung bei Schweißstromquellen auch bei Stromquellen für Ladevorrichtungen, insbesondere für Batterieladegeräte und für Stromquellen der Plasmaschneid- und/oder Plasmaschweißtechnologie eingesetzt werden.

Das Schweißgerät 1 umfaßt eine Stromquelle 2 mit einem Leistungsteil 3, einer Prozeßsteuer- und/oder -regelvorrichtung 4 und einem dem Leistungsteil 3 bzw. der Prozeßsteuer- und/oder -regelvorrichtung 4 zugeordneten Umschaltglied 5. Das Umschaltglied 5 bzw. die Prozeßsteuer- und/oder -regelvorrichtung 4 ist mit einem Steuerventil 6 verbunden, welches in einer Versorgungsleitung 7 für ein Gas 8, insbesondere ein Schutzgas, wie beispielsweise CO2, Helium oder Argon und dgl., zwischen einem Gasspeicher 9 und einem Schweißbrenner 10 angeordnet ist.

Zudem kann über die Prozeßsteuer- und/oder -regelvorrichtung 4 noch ein Drahtvorschubgerät 11, welches für das MIG/MAG-Schweißen üblich ist, angesteuert werden, wobei über eine Versorgungsleitung 12 ein Schweißdraht 13 von einer Vorratstrommel 14 in den Bereich des Schweißbrenners 10 zugeführt wird. Selbstverständlich ist es möglich, daß das Drahtvorschubgerät 11, wie es aus dem Stand der Technik bekannt ist, im Schweißgerät 1, insbesondere im Grundgehäuse, integriert ist und nicht, wie in Fig. 1 dargestellt, als Zusatzgerät ausgebildet ist.

Der Strom zum Aufbau eines Lichtbogens 15 zwischen dem Schweißdraht 13 und einem Werkstück 16 wird über eine Schweißleitung 17 vom Leistungsteil 3 der Stromquelle 2 dem Schweißbrenner 10 bzw. dem Schweißdraht 13 zugeführt, wobei das zu verschweißende Werkstück 16 über eine weitere Schweißleitung 18 ebenfalls mit dem Schweißgerät 1, insbesondere mit der Stromquelle 2, verbunden ist und somit über den Lichtbogen 15 ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Wasserbehälter 21 verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet und somit eine Kühlung des Schweißbrenners 10 bzw. des Schweißdrahtes 13 bewirkt werden kann.

Das Schweißgerät 1 weist weiters eine Ein- und/oder Ausgabevorrichtung 22 auf, über die die unterschiedlichsten Schweißparameter bzw. Betriebsarten des Schweißgerätes 1 eingestellt werden können. Dabei werden die über die Ein- und/oder Ausgabevorrichtung 22 eingestellten Schweißparameter an die Prozeßsteuer- und/oder -regelvorrichtung 4 weitergeleitet und von dieser werden anschließend die einzelnen Komponenten der Schweißanlage bzw. des Schweißgerätes 1 entsprechend angesteuert.

Weiters ist im dargestellten Ausführungsbeispiel der Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine zum Stand der Technik zählende Verbindungsvorrichtung 24 mit dem Schweißbrenner 10 verbunden, wogegen die einzelnen Leitungen im Schlauchpaket 23 mit den einzelnen Kontakten des Schweißgerätes 1 über Anschlußbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse, des Schweißgerätes 1 verbunden.

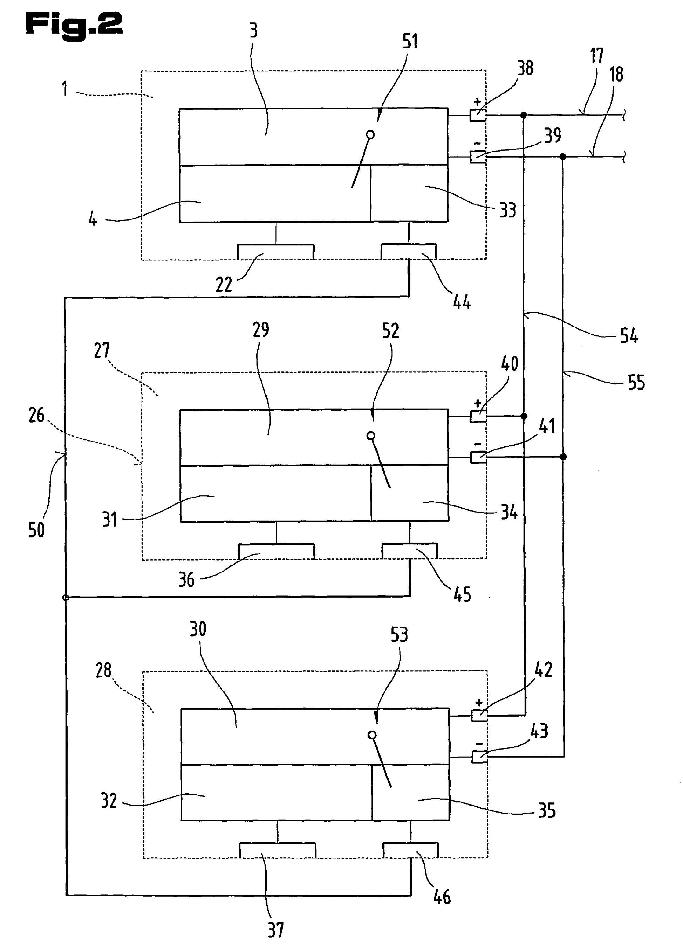

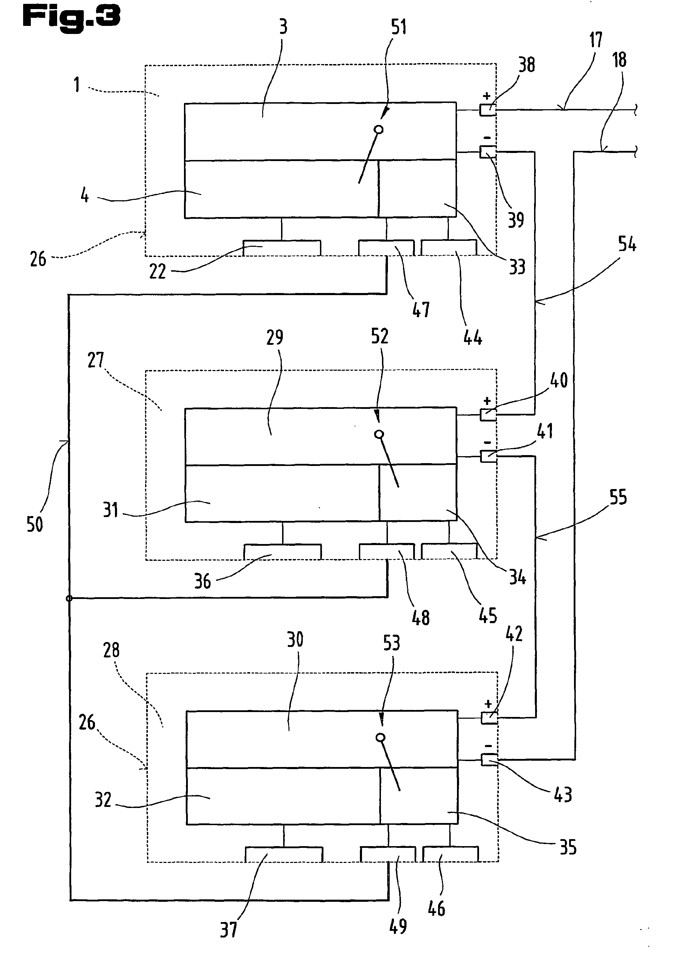

In Fig. 2 und 3 ist eine blockschaltbildliche Darstellung von mehreren unabhängigen Schweißgeräten 1, 27, 28 gezeigt, wobei auf die Darstellung sämtlicher erforderlicher Baugruppen bzw. Komponenten für den Aufbau eines Schweißgerätes 1, 27, 28 verzichtet wurde. Die Schweißgeräte 1, 27, 28 können beispielsweise wie in Fig. 1 beschrieben aufgebaut werden.

Zur anschaulicheren Darstellung der erfindungsgemäßen Lösung wurde der Aufbau der Schweißgeräte 1, 27, 28 durch ein stark vereinfachtes Blockschaltbild dargestellt, in dem nur mehr die einzelnen wesentlichen Komponenten zur Schaffung der erfindungsgemäßen Lösung eingetragen sind. Die Schweißgeräte 1, 27, 28 sind aus einem Leistungsteil 3, 29, 30, in dem ein digitaler U/I-Regler integriert ist, einer Prozeßsteuer- und/oder -regelvorrichtung 4, 31, 32, insbesondere einer Mikroprozessorsteuerung, zur Steuerung und/oder Regelung eines Prozesses, insbesondere eines Schweißprozesses, und einem Interface 33, 34, 35 zur Kommunikation mit den internen und/oder externen Baugruppen bzw. Komponenten aufgebaut. Selbstverständlich ist es dabei möglich, daß die einzelnen Baugruppen bzw. Komponenten auch direkt miteinander kommunizieren können.

An die einzelnen dargestellten Komponenten des Schweißgerätes 1, 27, 28 sind die weiteren internen und/oder externen Baugruppen angeschlossen. Dabei ist beispielsweise mit der Prozeßsteuer- und/oder -regelvorrichtung 4, 31, 32 eine Ein- und/oder Ausgabevorrichtung 22, 36, 37 zur Einstellung und Anzeige der Schweißparameter verbunden. Mit dem Leistungsteil 3, 29, 30 sind beispielsweise sekundärseitig angeordnete Ausgangsbuchsen 38 bis 43 für das positive und das negative Potential verbunden, so daß durch Anschluß eines Schweißbrenners 10 -Fig. 1 - über die Versorgungsleitungen 17, 18 ein entsprechend eingestellter Prozeß, insbesondere Schweißprozeß, ausgeführt werden kann. Um einen Datentransfer mit einer externen Einheit bzw. Anlage, wie beispielsweise einer Robotersteuerung, einer SPS-Steuerung, einem PC bzw. Laptop usw., durchführen zu können, ist mit dem Interface 33, 34, 35 eine standardisierte digitale Schnittstelle 44, 45, 46 verbunden. Selbstverständlich können noch weitere, nicht dargestellte Baugruppen bzw. Bauelemente oder Komponenten, wie beispielsweise eine Drahtvorschubvorrichtung, ein Kühlkreislauf usw., mit den entsprechenden Komponenten bzw. mit speziellen oder standardisierten Anschlußvorrichtungen verbunden werden, so daß diese entsprechend angesteuert und/oder geregelt werden können.

Um mit den schematisch dargestellten Schweißgeräten 1, 27, 28 unabhängig voneinander einen Schweißprozeß durchführen zu können, kann ein Benutzer über die Ein- und/oder Ausgabevorrichtungen 22, 36, 37 einen entsprechenden Schweißprozeß bzw. einzelne Schweißparameter bzw. Betriebsparameter einstellen, so daß anschließend von den Prozeßsteuer- und/oder -regelvorrichtungen 4, 31, 32 die Schweißprozesse berechnet werden können, worauf die Prozeßsteuer- und/oder -regelvorrichtungen 4, 31, 32 ein oder mehrere Steuer- und/oder Regelsignal(e) an die weiteren Komponenten des Schweißgerätes 1, 27, 28 weiterleiten. Die Prozeßregelung für einen Schweißprozeß wird beim dargestellten Ausführungsbeispiel nur von der Komponente des Leistungsteils 3, 29, 30 durchgeführt, d.h. daß beispielsweise die ermittelten Istwerte des Schweißprozesses direkt an das Leistungsteil 3, 29, 30 rückgeführt werden, wobei die Prozeßsteuer- und/oder -regelvorrichtung 4, 31, 32 lediglich Steuer-, Kontroll- und Überwachungsfunktionen durchführt. Dadurch wird erreicht, daß die Prozeßregelung für den durchzuführenden technischen Prozeß, insbesondere den Schweißprozeß, unabhängig von den einzelnen Prozeßsteuer- und/oder -regelvorrichtungen 4, 31, 32 erfolgt. Die Erfassung der einzelnen Istwerte kann bei dem dargestellten Ausführungsbeispiel durch aus dem Stand der Technik bekannte Systeme, wie beispielsweise einen Strommeßwiderstand bzw. Shunt - nicht dargestellt - für die Stromwerterfassung gebildet werden. Selbstverständlich ist es möglich, daß für die weiteren Baugruppen bzw. Komponenten die Regelung und Steuerung von der Prozeßsteuer- und/oder -regelvorrichtung 4, 31, 32 durchgeführt werden kann.

Durch die Integration der standardisierten, digitalen Schnittstelle 44, 45, 46, insbesondere einer RS232-Schnittstelle, ist es möglich, daß entsprechende Softwareänderungen bzw. Programmänderungen oder Betriebsdaten bzw. Schweißparameter über diese Schnittstelle 44, 45, 46 in digitaler Form, also über ein digitales Datenprotokoll, weitergeleitet bzw. empfangen werden können. Dadurch wird auch erreicht, daß eine Anpassung der Schweißgeräte 1, 27, 28 an die neuesten Schweißprogramme in einfacher Form ermöglicht wird bzw. bei einer Koppelung der Schweißgeräte 1, 27, 28 beispielsweise mit einem Schweißroboter entsprechende Prozeßdaten, wie beispielsweise Schweißstart, Schweißstop oder dgl., übergeben werden können.

Derartige zuvor beschriebene Abläufe bzw. Funktionen sind bereits aus dem Stand der Technik bekannt und können von jedem dargestellten Schweißgerät 1, 27, 28 unabhängig voneinander selbst durchgeführt werden.

Erfindungsgemäß ist nunmehr vorgesehen, daß mehrere Schweißgeräte 1, 27, 28 gleicher und/oder unterschiedlicher Leistung bzw. gleicher und/oder unterschiedlicher Ausgangsparameter, insbesondere Maschinenkenndaten, sekundärseitig über die Ausgangsbuchsen 38 bis 43 zur Bildung eines physikalisch leistungsstärkeren Schweißgerätes 1 oder 27 oder 28 miteinander zusammengeschaltet werden, wobei für die Steuerung oder Regelung der zusammengeschalteten Schweißgeräte 1, 27, 28 diese digital über eine an sich bekannte digitale Schnittstelle 44, 45, 46 und/oder über eine spezielle, digitale Verbindungsschnittstelle 47, 48, 49, wie in Fig. 3 dargestellt für einen bidirektionalen Datenaustausch untereinander verbunden werden, wobei eine der Prozeßsteuer- und/oder -regelvorrichtungen 4, 31, 32, in diesem Fall die Prozeßsteuer- und/oder -regelvorrichtung 4 des Schweißgerätes 1 die Prozeßregelung übernimmt und alle weiteren Prozeßsteuer- und/oder -regelvorrichtungen 31, 32 der Schweißgeräte 27, 28 deaktiviert werden und die Schweißgeräte 27, 28 mit den deaktivierten Prozeßsteuer- und/oder -regelvorrichtungen 31, 32 die Sollwerte über die Schnittstelle 44, 45, 46 und/oder über die Verbindungsschnittstelle 47, 48, 49 vom prozeßregelnden Schweißgerät 1 erhalten.

Dazu werden die Schweißgeräte 1, 27, 28, gemäß Fig. 1, steuerungsseitig über die digitale Schnittstelle 44, 45, 49 über wenigstens ein Schnittstellenkabel 50 miteinander verbunden. Dabei ist es möglich, daß der Schnittstelle 44, 45, 46 eine Erkennungsvorrichtung - nicht dargestellt - zugeordnet ist. Diese Erkennungsvorrichtung kann beispielsweise durch eine Schaltvorrichtung, eine Transpondervorrichtung usw. oder softwaremäßig gebildet werden, wobei bei dem dargestellten Ausführungsbeispiel die Erkennungsvorrichtung softwaremäßig realisiert wurde. Diese hat die Aufgabe, daß sie beim Kontaktieren bzw. bei einem Anschluß des Schnittstellenkabels 50 an die Schnittstelle 44, 45, 46 erkennen kann, welche Art von Datenübertragung durchgeführt werden soll, d.h., daß die Erkennungsvorrichtung erkennt, ob ein Datenaustausch mit einem anderen Schweißgerät 1, 27, 28 oder mit einer anderen Anlage, wie beispielsweise einer Robotersteuerung, stattfinden soll. Die Erkennungsvorrichtung ist dazu direkt mit der Prozeßsteuer- und/oder -regelvorrichtung 4, 31, 32 und dem Interface 33, 34, 35 verbunden bzw. bei der softwaremäßigen Realisierung in der Prozeßsteuer- und/oder -regelvorrichtung 4, 31, 32 integriert, so daß beim Aktivieren bzw. nach einem Anschluß eines oder mehrerer Schweißgeräte 1, 27, 28 über das Schnittstellenkabel 50 an die Schnittstelle 44, 45, 46 ein repräsentatives Signal an die Prozeßsteuer- und/oder -regelvorrichtung 4, 31, 32 bereitgestellt wird. Die Umschaltung der Schweißgeräte 1, 27, 28 in einen "Mehrbetriebsmodus" kann somit über diese Erkennungsvorrichtung gegebenenfalls vollautomatisch erfolgen.

Anstelle oder zusätzlich zu dieser Schnittstelle 44, 45, 46 ist es selbstverständlich auch möglich, eine spezielle Verbindungsschnittstelle 47, 48, 49, wie zuvor erwähnt, zur drahtgebundenen oder drahtlosen Kopplung mit einem äquivalent ausgestatteten Schweißgerät 1, 27, 28 einzusetzen und über diese Verbindungsschnittstelle 47, 48, 49, die in Fig. 3 dargestellt ist, weitere Leistungsmerkmale und Vorteile zu erzielen.

Weiters ist erfindungsgemäß vorgesehen, daß zwischen der Prozeßsteuer- und/oder -regelvorrichtung 4, 31, 32 und dem Interface 33, 34, 35 ein Unterbrechungselement 51, 52, 53 angeordnet ist, wie schematisch mit einem Schaltelement dargestellt wurde. Das Unterbrechungselement 51, 52, 53 hat die Aufgabe, die Prozeßsteuer- und/oder-regelvorrichtung 4, 31, 32 von der Prozeßregelung, insbesondere von den Komponenten des Leistungsteils 3, 29, 30, entweder wirkungsmäßig oder galvanisch zu trennen, d.h., daß durch das Unterbrechungselement 51, 52, 53 bei Aktivieren der Schnittstelle 44, 45, 46 die Datenkommunikation zwischen der Prozeßsteuer- und/oder-regelvorrichtung 4, 31, 32 und dem Interface 33, 34, 35 und/oder dem Leistungsteil 3, 29, 30 deaktiviert wird. Die schematische Darstellung der Unterbrechungselemente 51, 52, 53 wurde in Form eines hardwaremäßigen Schaltelementes vorgenommen. Bevorzugt ist das Unterbrechungselement 51, 52, 53 jedoch durch eine softwaremäßige Lösung realisiert und bewirkt wahlweise eine funktionstechnische bzw. wirkungsmäßige Entkopplung oder Kopplung zwischen der Prozeßsteuer- und/oder regelvorrichtung 4, 31, 32 und dem zugeordneten Interface 33, 34, 35 bzw. Leistungsteil 3, 29, 30. Insbesondere wird durch das Unterbrechungselement 51, 52, 53 beim Aktivieren der Schnittstellen 44, 45, 46 die Datenkommunikation zwischen der Prozeßsteuer- und/oder - regelvorrichtung 4, 31, 32 und dem Interface 33, 34, 35 bzw. dem Leistungsteil 3, 29, 30 deaktiviert.

Dadurch wird erreicht, daß bis auf eine einzige Prozeßsteuer- und/oder -regelvorrichtung 4 oder 31 oder 32 die restlichen Prozeßsteuer- und/oder -regelvorrichtungen 4 oder 31 oder 32 deaktiviert werden, wodurch diese keinen Einfluß mehr auf die Prozeßregelungen, insbesondere auf das entsprechende Leistungsteil 3, 29, 30, haben können.

Durch das Zusammenschalten der Schweißgeräte 1, 27, 28 über das Schnittstellenkabel 50 wird also zuerst von den Prozeßsteuer- und/oder -regelvorrichtungen 4, 31, 32 festgestellt, welche Art von Datenübertragung durchgeführt werden soll, d.h., daß zuerst die Erkennung der Zusammenschaltung der Schweißgeräte 1, 27, 28 durchgeführt wird, worauf die weiteren Funktionsabläufe abgehandelt werden. Weiters wird bei diesem Datenaustausch softwaremäßig über die Prozeßsteuer- und/oder -regelvorrichtungen 4, 31, 32 selbständig festgelegt, welches Schweißgerät 1, 27, 28 die Steuer- oder Regelfunktion übernimmt, d.h., daß durch den Datenaustausch beispielsweise das Schweißgerät 1 als Hauptschweißgerät, insbesondere als Master-Schweißgerät 1, ausgewählt wird, wobei die weiteren Schweißgeräte 27, 28 als Neben-Schweißgeräte, insbesondere Slave-Schweißgeräte, fungieren. Nach dem Festlegen der Prioritäten der Schweißgeräte 1, 27, 28 werden nunmehr von den jeweiligen Prozeßsteuer-und/ oder-regelvorrichtungen 4, 31, 32 die Unterbrechungselemente 51, 52, 53 betätigt, d.h., dass die Verbindung zwischen den Prozeßsteuer- und/oder -regelvorrichtungen 4, 31, 32 zum Interface 33, 34, 35 bzw. zum Leistungsteil 3, 29, 30 unterbrochen wird. Dies wurde derart dargestellt, daß wenigstens ein Schaltelement bzw. Unterbrechungselement 51, 52, 53 derart geschaltet ist, daß dieses nunmehr eine wirkungsgekoppelte bzw. galvanische Verbindung zwischen dem Leistungsteil 3, 29, 30 und dem Interface 33,34,35 herstellt. Beim Master-Schweißgerät 1, bei dem die Prozeßsteuer- und/oder -regelvorrichtung 4 für die Prozeßsteuerung bzw. Prozeßregelung aktiviert ist, ist das Schaltelement bzw. das Unterbrechungselement 51 zwischen dem Leistungsteil 3 und der Prozeßsteuer- und/oder -regelvorrichtung 4 geschaltet.

Durch das Deaktivieren der Prozeßsteuer- und/oder -regelvorrichtungen 31, 32 bei den Neben-Schweißgeräten 27, 28 wird erreicht, daß nunmehr eine Prozeßsteuer- und/oder-regelvorrichtung 4 für mehrere Leistungsteile 3, 29, 30 zuständig ist und somit physikalisch gesehen ein Schweißgerät 1 oder 27 oder 28 mit mehreren Leistungsteilen 3 und 29 und 30 gebildet wird. Die Prozeßregelung bzw. die Prozeßsteuerung für die weiteren angeschlossenen Schweißgeräte 1, 27, 28 wird nunmehr vom Master-Schweißgerät 1, also von der Prozeßsteuer- und/oder -regelvorrichtung 4, durchgeführt, wobei der Datentransfer zwischen den einzelnen Schweißgeräten 1, 27, 28 über das Interface 33, 34, 35 und die standardisierte Schnittstelle 44, 45, 46 erfolgt.

Anstelle der vorhergehend beschriebenen automatischen Festlegung des Haupt-Schweißgerätes 1, 27, 28 ist es auch möglich, daß ein Anwender mittels der Ein- und/oder Ausgabevorrichtung 22, 36, 37 die Auswahl der Datenübertragungsart bzw. das jeweilige Haupt-Schweißgerät 1, 27, 28 gezielt bestimmen kann.

Es ist dabei auch möglich, daß die weiteren Prozeßsteuer- und/oder -regelvorrichtungen 31, 32 der Neben-Schweißgeräte 27, 28 die Prozeßsteuer- und/oder -regelvorrichtung 4 des Master-Schweißgerätes 1 für die Berechnung und Auswertung diverser Schweißparameter unterstützen, d.h., daß eine Aufteilung der Rechnerleistung auf die einzelnen zur Verfügung stehenden Prozeßsteuer- und/oder -regelvorrichtungen 4, 31, 32 erfolgt, wobei jedoch nur die Prozeßsteuer- und/oder-regelvorrichtung 4 des Master-Schweißgerätes 1 ein Steuer- und/oder Regelsignal bzw. dementsprechende Sollwerte an die Leistungsteile 3, 29, 30 übergibt. Die Sollwerte bzw. Steuer- und/oder Regelsignale werden über die Schnittstelle 44 ausgesandt, so daß die weiteren Komponenten der weiteren Schweißgeräte 27, 28, insbesondere die weiteren Leistungsteile 29, 30, diese für eine Prozeßregelung zur Verfügung haben.

Durch die beschriebene Lösung ist es nunmehr möglich, daß die einzelnen Ausgangsbuchsen 38 bis 43 der Leistungsteile 3, 29, 30 ohne steuerungsseitige und sekundärseitige Umbauten im Inneren der Schweißgeräte 1, 27, 28 miteinander verbunden werden können, d.h., daß beispielsweise eine Parallelschaltung oder eine Serienschaltung von Schweißgeräten 1, 27, 28, insbesondere der Leistungsteile 3, 29, 30, vorgenommen werden kann. Im Ausführungsbeispiel gemäß Fig. 2 ist eine Parallelschalung der Leistungsteile 3, 29, 30 und in Fig. 3 ist eine Serienschaltung der Leistungsteile 3, 29, 30 gezeigt. Ebenso ist es möglich, an jedem Leistungsteil 3, 29, 30 jeweils einen eigenen Schweißbrenner 10 - Fig. 1 - anzuschließen.

Beim dargestellten Ausführungsbeispiel nach Fig. 2 wurde eine Parallelschaltung der einzelnen Leistungsteile 3, 29, 30 dargestellt, wobei hierzu die einzelnen Ausgangsbuchsen 38 bis 43 zueinander parallel geschaltet wurden, d.h., daß die Ausgangsbuchsen 38, 40, 42 für das positive Potential über eine Leitung 54 miteinander verbunden wurden und die weiteren Ausgangsbuchsen 39, 41, 43 für das negative Potential ebenfalls über eine weitere Leitung 55 miteinander verbunden wurden. Durch dieses Verbinden der Leistungsteile 3, 29, 30, wie es vom Anwender selbst je nach Bedarf jederzeit vorgenommen werden kann, wird eine energietechnische Parallelschaltung der einzelnen Leistungsteile 3, 29, 30 bewirkt. Dadurch ist es nunmehr möglich, daß eine Leistungsaufteilung bzw. Leistungserhöhung für die Versorgung des Verbrauchers bzw. des Schweißbrenners 10 - Fig. 1 -, welcher beispielsweise am Leistungsteil 3 über die Schweißleitungen 17, 18 angeschlossen ist, durchgeführt werden kann. Diese Aufteilung bzw. Erhöhung der benötigten Leistung hat den Vorteil, daß dadurch Schweißgeräte 1, 27, 28 eingesetzt werden können, die gegenüber der benötigten Leistung kleiner dimensioniert sind. Durch das Parallelschalten mehrerer kleinerer Geräte kann dann die benötigte Leistung, insbesondere ein entsprechend höherer Schweißstrom, als jedes Schweißgerät 1, 27, 28 für sich selbst leisten könnte, erreicht werden. Dadurch wird also ermöglicht, daß kostengünstigere Schweißgeräte 1, 27, 28 auch für Schweißprozesse mit höherer Leistung, insbesondere mit höherem Strombedarf, eingesetzt werden können. Dies kann z.B. bei Kleinbetrieben genutzt werden, bei denen Schweißprozesse mit hoher Leistung, insbesondere mit hohem Strombedarf, relativ selten erforderlich sind, da diese nunmehr mit mehreren schwächer dimensionierten Schweißgeräten 1, 27, 28 ausgeführt werden können. Je nach der durch die Zusammenschaltung erzielbaren Leistungsfähigkeit ist es dann gegebenenfalls noch erforderlich, am jeweiligen Hauptschweißgerät 1 einen für die entsprechende Leistung ausgelegten Schweißbrenner 10 - Fig. 1 - zu montieren oder lediglich den Schweißdrahtdurchmesser und/oder den Durchmesser der Kontaktbuchse an die erzielbare Leistung anzupassen.

Um die Zusammenschaltung der Schweißgeräte 1, 27, 28 zu vereinfachen, sind Schlauchpakete 23 bzw. Schweißbrenner 10 - in Fig. 1 - für eine Mehrfachanbindung an einzelne Leistungsteile 3, 29, 30 vorgesehen. Somit können durch einfachen Austausch dieser Schlauchpakete 23 bzw. Schweißbrenner 10, welche mit entsprechenden Kupplungen bzw. Schnellwechselsystemen ausgestattet sind, die jeweils erforderlichen Umrüstarbeiten besonders rasch vorgenommen werden und es kann je nach Ausgestaltung der Schlauchpakete 23 eine Vielzahl von Schweißgeräten 1, 27, 28 zusammengeschaltet werden.

Bei der steuerungsseitigen Zusammenschaltung der einzelnen Schweißgeräte 1, 27, 28 wird eine Digitalverbindung mit hoher Datenübertragungsrate über die Schnittstellen 44, 45, 46 hergestellt, wobei die einzelnen Schweißparameter, beispielsweise der Stromsollwert, nur von einer Prozeßsteuer- und/oder -regelvorrichtung 4, 31, 32 ermittelt bzw. nur an einer Prozeßsteuer- und/oder-regelvorrichtung 4, 31, 32, insbesondere bei einer Ein- und/oder Ausgabevorrichtung 22, 36, 37, eingestellt werden muß. Anschließend werden diese Daten über die vorgenannte Verbindung an die weiteren Schweißgeräte 1, 27, 28 übersandt. Da jedoch jedes eingesetzte Schweißgerät 1, 27, 28 die für die Prozeßregelung bzw. Prozeßdurchführung benötigten weiteren Komponenten bzw. Baugruppen oder die Überwachungsfunktionen, wie beispielsweise die Istwertermittlung, die Temperaturüberwachung usw., aufweist, wird die Prozeßregelung, insbesondere die Schweißprozeßregelung, direkt von diesen Komponenten in den einzelnen Schweißgeräten 1, 27, 28, also unabhängig voneinander, ausgeführt. Jedes Schweißgerät 1, 27, 28 führt also die Steuerung bzw. Regelung der benötigten Leistung an den Ausgangsbuchsen 38 bis 43 selbständig durch, wodurch ein sehr schneller Regelprozeß für den Verbraucher bzw. Schweißbrenner 10 - Fig. 1 - erzielt ist und gleichzeitig der Datenaustausch untereinander reduziert werden kann. Damit wird auch erreicht, daß keine zusätzlichen Verdrahtungen und Umbauten der einzelnen Schweißgeräte 1, 27, 28 für das Zusammenschalten durchgeführt werden müssen, wie dies aus dem Stand der Technik bekannt ist.

Durch die voll ausgestatteten bzw. einzeln voll funktionsfähigen Schweißgeräte 1, 27, 28 werden auch in jedem einzelnen Schweißgerät 1, 27, 28 die Sicherheitsfunktionen, wie beispielsweise Übertemperatur, Eingangsspannung, Überstrom, Kurzschlußerkennung usw., überwacht bzw. erfüllt. Tritt jedoch ein entsprechender Fehler bei einem der Schweißgeräte 1, 27, 28 auf, so wird über die Schnittstelle 44, 45, 46 ein entsprechendes Signal ausgesandt, so daß das Master-Schweißgerät 1 erkennen kann, daß eine Fehlfunktion in einem der weiteren Schweißgeräte 27, 28 vorliegt. Dadurch ist es möglich, daß nunmehr das Master-Schweißgerät 1 den Schweißprozeß unterbricht und ein entsprechendes optisches und/oder akustisches Störsignal bzw. Warnsignal aussendet, um den Benutzer aufmerksam zu machen.

Weiters ist es möglich, daß durch das Verbinden bzw. durch das Zusammenschalten der einzelnen Schweißgeräte 1, 27, 28 das Master-Schweißgerät 1 durch einen Datenaustausch mit den weiteren Schweißgeräten 1, 27, 28 feststellen kann, welche Leistungsteile 3, 29, 30 in den weiteren Schweißgeräten 1, 27, 28 angeordnet sind, so daß eine entsprechende Aufteilung der benötigten Leistung auf die einzelnen Leistungsteile 3, 29, 30 bewirkt werden kann, d.h., daß die aktive Prozeßsteuer- und/oder -regelvorrichtung 4 die Leistungsparameter der über die Schnittstelle 44, 45, 46 oder über die Verbindungsschnittstelle 47, 48, 49 verbundenen Leistungsteile 3, 29, 30 erkennen kann und somit für die Prozeßsteuerung eine Lastaufteilung bzw. Leistungsaufteilung durchgeführt wird. Dabei ist es auch möglich, daß die aktive Prozeßsteuer- und/oder -regelvorrichtung 4 nicht die Anzahl der zusammengeschalteten Schweißgeräte 1, 27, 28 bzw. Leistungsteile 3, 29, 30, sondern die Summe der erzielbaren Energie, insbesondere der Ausgangsspannung und/oder des Ausgangsstroms, erkennt, worauf vom Master-Schweißgerät 1 ein entsprechendes Ausgangssignal bzw. ein entsprechender Sollwert ausgesendet wird.

Ein Vorteil der Möglichkeit zur zumindest steuerungsseitigen Kopplung mehrerer Schweißgeräte 1, 27, 28, also ohne das Zusammenschalten der Leistungsteile 3, 29, 30, liegt darin, daß die Einstellung der Schweißparameter, wie z.B. der Höhe des Schweißstromes, der Vorschubgeschwindigkeit des Schweißdrahtes und dgl., von nur einem Benutzer an einer der Ein- und/oder Ausgabevorrichtungen 22, 36, 37 an einem beliebigen Schweißgerät 1, 27, 28 vorgenommen werden muß und durch die steuerungsseitige Kopplung sämtliche Schweißgeräte 1, 27, 28 entsprechend den neuen Sollwerten arbeiten können. Diese Möglichkeit zur steuerungsseitigen Kopplung mehrerer Schweißgeräte 1, 27, 28 ist beispielsweise für Schulungs- bzw. Demozwecke von besonderem Vorteil. Aber auch wenn mehrere Schweißtechniker unter gleichen Bedingungen gemeinsam an einem Werkstück bzw. Objekt die gleichen Schweißarbeiten ausführen sollen, ist dies vorteilhaft, da die Einstellung der Schweißparameter von nur einem der Schweißtechniker vorgenommen werden muß. Diese Einstellungen nimmt dabei bevorzugt jener Schweißtechniker vor, welcher beispielsweise über die entsprechenden Kenntnisse bzw. Erfahrungswerte verfügt. Für den auszubildenden Schweißtechniker bzw. für den zweiten Schweißtechniker erübrigen sich somit diffizile Einstellvorgänge.

Gemäß einer besonders vorteilhaften Weiterbildung kann die erfindungsgemäße. Kopplung der Schweißgeräte 1, 27, 28 auch für sogenannte Mehrdrahtschweißsysteme genutzt werden.

Dabei sind wenigstens zwei grundsätzlich eigenständige Schweißgeräte 1, 27, 28 über die Schnittstelle 44, 45, 46 steuerungsseitig gekoppelt und die Schweißdrähte 13 eines jeden Schweißgerätes 1, 27, 28 sind einem gemeinsamen Schweißbrenner 10 - Fig. 1 - zugeführt. Jede der dem gemeinsamen Schweißbrenner 10 zugeführten Drahtelektroden wird dabei von dem jeweiligen Leistungsteil 3, 29, 30 mit der jeweils erforderlichen, elektrischen Energie versorgt. Die einzig aktive Prozeßsteuer- und/oder -regelvorrichtung 4 steuert dabei die funktionell angekoppelten Leistungsteile 3, 29, 30 bzw. deren Drahtvorschubgeräte derart an, daß ein gleichzeitiger oder zeitlich aufeinanderfolgender Abbrand der einzelnen Schweißdrähte 13 erfolgt, wobei die Prozeßregelung der Leistungsteile 3, 29, 30 jedoch unabhängig voneinander erfolgt.

Gemäß der Fig. 3 sind wiederum mehrere Schweißgeräte 1, 27, 28 zu einer elektrischen Einheit zusammengeschaltet.

Dabei zeigt das Ausführungsbeispiel nach Fig. 3 nunmehr eine Serienschaltung mehrerer Leistungsteile 3, 29, 30, die nunmehr über die spezielle Verbindungsschnittstelle 47, 48, 49 miteinander verbunden sind.

Bei dem dargestellten Ausführungsbeispiel - gemäß Fig. 3 - sind die drei blockschaltbildlich dargestellten Schweißgeräte 1, 27, 28 wiederum über das Schnittstellenkabel 50 in direkter Form elektrisch miteinander verbunden, d.h., daß die zusätzlichen Verbindungsschnittstellen 47, 48, 49 miteinander verbunden wurden. Da diese Verbindungsschnittstellen 47, 48, 49 bevorzugt als Schnittstellen für eine bitparallele Datenübertragung ausgebildet sind, kann ein sehr rascher bidirektionaler Datenaustausch vorgenommen werden. Anstelle elektrische Verbindungsschnittstellen 47, 48, 49 vorzusehen, ist es selbstverständlich auch möglich, die Verbindungsschnittstellen 47, 48, 49 bzw. die Schnittstellen 44, 45, 46 - gemäß Fig. 2 - für eine induktive Kopplung über elektromagnetische Wechselfelder und/oder für eine optische Kopplung via entsprechender Lichtsignale oder über Funk auszubilden, also eine Kopplung elektromagnetisch und/oder elektrisch und/oder optisch und/oder induktiv durchzuführen.

Für die Serienschaltung der Schweißgeräte 1, 27, 28 - gemäß Fig. 3 - wird beispielsweise das Leistungsteil 3 des Master-Schweißgerätes 1, insbesondere dessen Ausgangsbuchse 39 für das negative Potential, mit der Ausgangsbuchse 40 des Schweißgerätes 27 für das positive Potential über die Leitung 54 verbunden. Die Ausgangsbuchse 41 für das negative Potential des Schweißgerätes 27 wird über die Leitung 55 mit der Ausgangsbuchse 42 für das positive Potential des Schweißgerätes 28 verbunden. Der Verbraucher, insbesondere der Schweißbrenner 10, wird über die Versorgungsleitungen 17, 18 nunmehr nicht nur mit einem Leistungsteil 3, 29, 30 verbunden, sondern wird über die Schweißleitungen 17, 18 mit der Ausgangsbuchse 38 für das positive Potential des Leistungsteils 3 und der Ausgangsbuchse 43 für das negative Potential des Leistungsteils 30 verbunden.

Der Vorteil dieser Serienschaltung der einzelnen Leistungsteile 3, 29, 30 liegt darin, daß bei Schweißprozessen, bei denen eine höhere Spannung benötigt wird, die Einzelspannungen durch die Serienschaltung aufsummiert werden und somit ein Schweißprozeß mit sehr hoher Ausgangsspannung bei gleichbleibender Höhe des Ausgangsstroms ausgeführt werden kann. Die Prozeßregelung wird, wie in Fig. 2 beschrieben, wiederum selbständig von den einzelnen Schweißgeräten 1, 27, 28 durchgeführt, wobei wiederum nur eine Prozeßsteuer- und/oder -regelvorrichtung 4 aktiviert bleibt und die weiteren deaktiviert werden.

Bei dem dargestellten Ausführungsbeispiel ist eine Zusammenschaltung von drei Schweißgeräten 1, 27, 28 gezeigt, wobei es selbstverständlich möglich ist, daß nur zwei oder mehr als drei Schweißgeräte 1, 27, 28 verbunden werden.

Zur Minimierung der Ausgangsstromwelligkeit und/oder zur Verbesserung der elektromagnetischen Verträglichkeit werden die einzelnen Leistungsteile 3, 29, 30 mit gleicher Taktfrequenz über die Schnittstelle 44, 45, 46 und/oder über die Verbindungsschnittstelle 47, 48, 49 zueinander synchronisiert, wobei die einzelnen Leistungsteile 3, 29, 30 mit einer entsprechenden Phasenverschiebung angesteuert werden. Dabei ist es möglich, daß ein beliebiges Schweißgerät 1, 27, 28 die Synchronisierung übernimmt, d.h., daß die gebildeten Synchronisierungssignale bzw. Taktsignale nicht vom Master-Schweißgerät 1, sondern von einem Neben-Schweißgerät 27, 28 erzeugt und ausgesendet werden. Damit wird eine Rechnerentlastung des Master-Schweißgerätes 1 erzielt.

Damit die Schweißgeräte 1, 27, 28 mit Energie versorgt werden, ist es möglich, daß die zusammengeschalteten Schweißgeräte 1, 27, 28 in Sternschaltung, Dreieckschaltung oder jeweils parallel an ein Wechsel- bzw. Drehspannungsnetz angeschlossen werden, wobei jedes Schweißgerät 1, 27, 28 bevorzugt als Einphasen-Wechselspannungsgerät ausgebildet wird. Somit kann auf jeder Phase eines mehrphasigen Wechselspannungsnetzes ein Schweißgerät 1, 27, 28 angeschlossen werden.

Bei einer Verbindung der Schweißgeräte 1, 27, 28 über die Verbindungsschnittstelle 47, 48, 49 empfiehlt es sich, daß die Schweißgeräte 1, 27, 28 zusätzlich über die standardisierte Schnittstelle 44, 45, 46 miteinander verbunden werden, wobei über diese dann jene Daten übertragen werden, die nicht für die Prozeßsteuerung und/oder Prozeßregelung benötigt werden und somit die Schnittstellenbelastung aufgeteilt werden kann.

Ein wesentlicher Vorteil eines derartigen Systems zum Zusammenschalten mehrerer Schweißgeräte 1, 27, 28 ist dadurch gegeben, daß nunmehr automatisch oder selektiv durch den Benutzer ein Master-Schweißgerät 1 festgelegt wird, welches die einzelnen Steuer- und/oder Regelsignale generiert, jedoch die Prozeßregelung in den einzelnen Schweißgeräten 1, 27, 28 selbständig und zur gleichen Zeit unabhängig voneinander vorgenommen bzw. durchgeführt werden kann. Zudem ist es möglich, daß nunmehr das Master-Schweißgerät 1 über eine weitere oder über die bereits aus dem Stand der Technik bekannte serielle Schnittstelle 44, 45, 46 mit einer externen Komponente, wie beispielsweise mit einer SPS-Steuerung oder einer Robotersteuerung zusammengeschaltet wird, so daß auch ein bidirektionaler Datenaustausch zwischen externen Komponenten und den zusammengeschalteten Schweißgeräten 1, 27, 28 durchgeführt wird. Ein weiterer wesentlicher Vorteil liegt darin, daß die Rechnerleistung bei komplexen Prozeßregelungen auf mehrere Prozeßsteuer- und/oder -regelvorrichtungen 4, 31, 32 aufgeteilt werden kann, so daß eine Beschleunigung des Rechenprozesses erreicht wird.

Selbstverständlich ist es aber auch möglich, lediglich durch bloßes Aneinanderreihen bzw. formschlüssiges Aneinandersetzen die elektrische Verbindung zwischen den Verbindungsschnittstellen 47, 48, 49 oder den Schnittstellen 44, 45, 46 automatisch herzustellen. Hierfür sind elektromechanische Steckkupplungen vorgesehen, welche durch entsprechendes Aneinanderreihen der Schweißgeräte 1, 27, 28 selbsttätig die gewünschten elektrischen Verbindungen zwischen den Leistungsteilen 3, 29, 30 aufbauen. Es ist aber auch möglich, an den Leistungsteilen 3, 29, 30 sogenannte Kontaktschieber vorzusehen, welche im ausgefahrenen Zustand mit der Verbindungsschnittstelle 47, 48, 49 eines benachbart angeordneten Leistungsteils 3, 29, 30 kontaktieren können.

Der Vorteil dieser Ausbildung liegt darin, daß eigenständige Kabelverbindungen erübrigt werden und mehrere Schweißgeräte 1, 27, 28 zu einer kompakten einstückigen Einheit zusammengefaßt werden können. Zur formschlüssigen Verbindung der einzelnen Schweißgeräte 1, 27, 28 können dabei korrespondierende Vertiefungen und Erhebungen an den Gehäusen 26 der Schweißgeräte 1, 27, 28 vorgesehen sein.

Der wesentliche Unterschied zu dem aus dem Stand der Technik bekannten Lösungsvarianten besteht darin, daß, insbesondere bei einer Parallelschaltung der Ausgangsbuchsen 38 bis 43 der einzelnen Schweißgeräte 1, 27, 28, sämtliche Leistungsteile 3, 29, 30 genutzt werden, aber lediglich eine einzige Prozeßsteuer- und/oder -regelvorrichtung 4 oder 31 oder 32 aktiv in Betrieb ist. Üblicherweise wird die Deaktivierung der zusätzlichen Prozeßsteuer- und/oder -regelvorrichtungen 4, 31, 32 durch das Unterbrechungselement 51, 52, 53 und die Erkennung der Datenverbindung durch die Erkennungsvorrichtung bei der erfindungsgemäßen Lösung softwaremäßig durchgeführt, wogegen bei den Ausbildungen aus dem Stand der Technik ein manueller Eingriff in die Elektronik bzw. in den Innenaufbau der Schweißgeräte 1, 27, 28 notwendig war.

Abschließend sei darauf hingewiesen, daß in den zuvor beschriebenen Ausführungsbeispielen einzelne Teile unproportional vergrößert dargestellt wurden, um das Verständnis der erfindungsgemäßen Lösung zu verbessern. Des weiteren können auch einzelne Teile der zuvor beschriebenen Merkmalskombinationen der einzelnen Ausführungsbeispiele in Verbindung mit anderen Einzelmerkmalen aus anderen Ausführungsbeispielen eigenständige, erfindungsgemäße Lösungen bilden.

### Bezugszeichenaufstellung

- 1: Schweißgerät
- 2: Stromquelle
- 3: Leistungsteil
- 4: Prozeßsteuer- und/oder -regelvorrichtung
- 5: Umschaltglied

- 6: Steuerventil
- 7: Versorgungsleitung
- 8: Gas
- 9: Gasspeicher
- 10: Schweißbrenner

- 11: Drahtvorschubgerät
- 12: Versorgungsleitung
- 13: Schweißdraht
- 14: Vorratstrommel
- 15: Lichtbogen

- 16: Werkstück
- 17: Schweißleitung
- 18: Schweißleitung
- 19: Kühlkreislauf
- 20: Strömungswächter

- 21: Wasserbehälter
- 22: Ein- und/oder Ausgabevorrichtung
- 23: Schlauchpaket
- 24: Verbindungsvorrichtung
- 25: Zugentlastungsvorrichtung

- 26: Gehäuse
- 27: Schweißgerät
- 28: Schweißgerät
- 29: Leistungsteil
- 30: Leistungsteil

- 31: Prozeßsteuer- und/oder -regelvorrichtung
- 32: Prozeßsteuer- und/oder -regelvorrichtung
- 33: Interface
- 34: Interface
- 35: Interface

- 36: Ein- und/oder Ausgabevorrichtung
- 37: Ein- und/oder Ausgabevorrichtung
- 38: Ausgangsbuchse
- 39: Ausgangsbuchse

- 40: Ausgangsbuchse
- 41: Ausgangsbuchse
- 42: Ausgangsbuchse
- 43: Ausgangsbuchse
- 44: Schnittstelle

- 45: Schnittstelle
- 46: Schnittstelle
- 47: Verbindungsschnittstelle
- 48: Verbindungsschnittstelle
- 49: Verbindungsschnittstelle

- 50: Schnittstellenkabel
- 51: Unterbrechungselement
- 52: Unterbrechungselement
- 53: Unterbrechungselement
- 54: Leitung
- 55: Leitung

## Patentansprüche

1. Verfahren zum Verbinden bzw. Zusammenschalten mehrerer Schweißgeräte, insbesondere mehrerer Schweißstromquellen, Plasmastromquellen oder dgl., wobei im Einzelbetrieb bei jedem Schweißgerät eine Prozeßsteuer- und/oder -regelvorrichtung Sollwerte an einen U/I-Regler eines Leistungsteils übergibt und das Leistungsteil entsprechend den Sollwerten einen an Ausgangsbuchsen angeschlossenen Verbraucher mit Energie (Strom/Spannung) versorgt und die Prozeßsteuer- und/oder -regelvorrichtung über eine Schnittstelle mit einer weiteren Komponente, wie beispielsweise einem weiteren Schweißgerät, einer Robotersteuerung, einem PC oder Laptop usw., einen Datenaustausch vornehmen kann und mehrere Schweißgeräte (1, 27, 28) gleicher und/oder unterschiedlicher Leistung bzw. gleicher und/oder unterschiedlicher Ausgangsparameter, insbesondere Maschinenkenndaten, sekundärseitig über die Ausgangsbuchsen (38 bis 43) zur Bildung eines physikalisch leistungsstärkeren Schweißgerätes (1, 27, 28) miteinander verbunden werden, wobei eine Prozeßsteuer- und/oder -regelvorrichtung (4, 31, 32) eines Schweißgerätes (1, 27, 28) die Prozeßregelung übernimmt und alle weiteren Prozeßsteuer- und/oder -regelvorrichtungen (4, 31, 32) der Schweißgeräte (1, 27, 28) deaktiviert werden und die Schweißgeräte (1, 27, 28) mit den deaktivierten Prozeßsteuer- und/oder -regelvorrichtungen (4, 31, 32) die Sollwerte über die Schnittstelle (44, 45, 46) und/oder die Verbindungsschnittstelle (47, 48, 49) vom prozeßregelnden Schweißgerät (1, 27, 28) erhalten, **dadurch gekennzeichnet, daß** für die Steuerung oder Regelung der zusammengeschalteten Schweißgeräte (1, 27, 28) diese digital über eine an sich bekannte digitale Schnittstelle (44, 45, 46) und/oder eine spezielle, digitale Verbindungsschnittstelle (47, 48, 49) für einen Datenaustausch untereinander verbunden werden und das Schweißgerät (1, 27, 28) ein Unterbrechungselement (51, 52, 53) aufweist, mittels dem die Prozeßsteuer- und/oder -regelvorrichtung (4, 31, 32) deaktiviert wird, wobei das Unterbrechungselement (51, 52, 53) softwaremäßig in der Prozeßsteuer- und/oder-regelvorrichtung (4, 31, 32) realisiert wird, und wobei bei Aktivieren der Schnittstellen (44, 45, 46) und/oder der Verbindungsschnittstelle (47, 48, 49) durch das Unterbrechungselement (51, 52, 53) die Datenkommunikation zwischen der Prozeßsteuer- und/oder -regelvorrichtung (4, 31, 32) und einem Interface (33, 34, 35) und/oder dem Leistungsteil (3, 29, 30) deaktiviert wird.

2. Verfahren nach Anspruch 1, **dadurch gekennzeichnet, daß** zum Minimieren der Ausgangsstromwelligkeit und/oder zur Verbesserung der elektromagnetischen Verträglich keit die einzelnen Leistungsteile (3, 29, 30) mit gleicher Taktfrequenz über die Schnittstelle (44, 45, 46) und/oder über die Verbindungsschnittstelle (47, 48, 49) zueinander synchronisiert werden, wobei die einzelnen Leistungsteile (3, 29, 30) mit einer entsprechenden Phasenverschiebung angesteuert werden.

3. Verfahren nach Anspruch 1 oder 2, **dadurch gekennzeichnet, daß** die aktive Prozeßsteuer- und/oder -regelvorrichtung (4) nicht die Anzahl der zusammengeschalteten Schweißgeräte (1, 27, 28) bzw. Leistungsteile (3, 29, 30), sondern die Summe der erzielbaren Energie, insbesondere der Ausgangsspannung und/oder des Ausgangsstroms, erkennt.

4. Verfahren nach einem oder mehreren der vorhergehenden Ansprüche, **dadurch gekennzeichnet, daß** die zusammengeschalteten Schweißgeräte (1, 27, 28) in Sternschaltung, Dreieckschaltung oder parallel an ein Wechsel- bzw. Drehspannungsnetz angeschlossen werden, wobei jedes Schweißgerät (1, 27, 28) bevorzugt als Einphasen-Wechselspannungsgerät ausgebildet wird.

5. Verfahren nach einem oder mehreren der vorhergehenden Ansprüche, **dadurch gekennzeichnet, daß** die Schweißgeräte (1, 27, 28) steuerungsseitig elektromagnetisch und/oder elektrisch und/oder optisch und/oder induktiv gekoppelt werden.

6. Verfahren nach einem oder mehreren der vorhergehenden Ansprüche, **dadurch gekennzeichnet, daß** Ausgangsbuchsen (38 bis 43) der Leistungsteile (3, 29, 30) je nach benötigter Leistung über Leitungen (54, 55) oder Schweißleitungen (17, 18) parallel oder seriell miteinander verbunden werden, wobei an zumindest zwei Ausgangsbuchsen (38 bis 43), insbesondere an einem positiven und einem negativen Potential, der Verbraucher, insbesondere der Schweißbrenner (10), angeschlossen wird.

7. Verfahren nach einem oder mehreren der vorhergehenden Ansprüche, **dadurch gekennzeichnet, daß** die aktivierte Prozeßsteuer- und/oder -regelvorrichtung (4) die Leistungsparameter der über die Schnittstelle (44, 45, 46) oder über die Verbindungsschnittstellen (47, 48, 49) verbundenen Leistungsteile (3, 29, 30) erkennen kann und somit für die Prozeßregelung eine Lastaufteilung bzw. Leistungsaufteilung durchgeführt wird.

8. Verfahren nach einem oder mehreren der vorhergehenden Ansprüche, **dadurch gekennzeichnet, daß** die für einen Schweißprozeß bzw. einen Stromversorgungsprozeß erfor derlichen Sicherheitswerte und/oder Kontrollfunktionen, wie beispielsweise Übertemperatur, Eingangsspannung, Überstrom, usw., von jedem Schweißgerät (1, 27, 28) eigenständig überwacht bzw. vorgenommen werden.

9. Verfahren nach einem oder mehreren der vorhergehenden Ansprüche, **dadurch gekennzeichnet, daß** die Datenübertragung zwischen den einzelnen Schweißgeräten (1, 27, 28) über die Schnittstelle (44, 45, 46) und/oder die Verbindungsschnittstelle (47, 48, 49) bidirektional erfolgt.

10. Schweißgerät, insbesondere Schweißstromquelle oder Plasmastromquelle, welches zumindest aus einer Prozeßsteuer- und/oder -regelvorrichtung und einem Leistungsteil besteht, in welchem ein U/I- Regler integriert ist und dieses Schweißgerät (1) mit zumindest einem weiteren äquivalent ausgebildeten Schweißgerät (27, 28) steuerungsseitig verbindbar ist, wobei sekundärseitig die Ausgangsbuchsen (38 bis 43) des Leistungsteils (3) eines Schweißgerätes (1) mit Ausgangsbuchsen (38 bis 43) zumindest eines weiteren Leistungsteils (29, 30) eines weiteren Schweißgerätes (27, 28) mit gleicher und/oder unterschiedlicher Leistung bzw. gleicher und/oder unterschiedlicher Ausgangsparameter, insbesondere Maschinenkenndaten, verbindbar sind, und daß eine Prozeßsteuer- und/oder -regelvorrichtung (4) eines Schweißgerätes (1) für die Prozeßregelung sämtlicher zusammengeschalteter Schweißgeräte (1, 27, 28) aktivierbar ist und alle weiteren Prozeßsteuer- und/oder -regelvorrichtungen (31, 32) der Schweißgeräte (27, 28) deaktivierbar sind, **dadurch gekennzeichnet, daß** das Schweißgerät (1, 27, 28) wenigstens eine spezielle, digitale Verbindungsschnittstelle (47, 48, 49) oder eine an sich bekannte digitale Schnittstelle (44, 45, 46) zur Verbindung mit dem Schweißgerät (27, 28) aufweist und das Schweißgerät (1, 27, 28) ein Unterbrechungselement (51, 52, 53) aufweist, mittels dem die Prozeßsteuer- und/oder-regelvorrichtung (4, 31, 32) deaktivierbar ist, wobei das Unterbrechungselement (51, 52, 53) softwaremäßig in der Prozeßsteuer- und/oder -regelvorrichtung (4, 31, 32) realisiert ist, und wobei bei Aktivieren der Schnittstellen (44, 45, 46) und/oder der Verbindungsschnittstelle (47, 48, 49) durch das Unterbrechungselement (51, 52, 53) die Datenkommunikation zwischen der Prozeßsteuer- und/oder -regelvorrichtung (4, 31, 32) und einem Interface (33, 34, 35) und/oder dem Leistungsteil (3, 29, 30) deaktivierbar ist.

11. Schweißgerät bzw. Stromquelle nach Anspruch 10, **dadurch gekennzeichnet, daß** die Ausgangsbuchsen (38 bis 43) der zusammengeschalteten Leistungsteile (3, 29, 30) parallel und/oder seriell zusammengeschaltet sind.

12. Schweißgerät bzw. Stromquelle nach einem der Ansprüche 10 oder 11, **dadurch gekennzeichnet, daß** die Schnittstelle (44, 45, 46) oder die Verbindungsschnittstelle (47, 48, 49) mit einem Interface (33, 34, 35) eines Schweißgerätes (1, 27, 28) verbunden ist.

13. Schweißgerät bzw. Stromquelle nach einem oder mehreren der Ansprüche 10 bis 12, **dadurch gekennzeichnet, daß** das Schweißgerät (1, 27, 30) eine Erkennungsvorrichtung für das Aktivieren der Schnittstelle (44, 45, 46) oder der Verbindungsschnittstelle (47, 48, 49) aufweist.

14. Schweißgerät bzw. Stromquelle nach einem oder mehreren der Ansprüche 10 bis 13, **dadurch gekennzeichnet, daß** die Erkennungsvorrichtung (67, 68, 69) durch eine elektromechanische Schaltvorrichtung oder durch eine Transponderanordnung gebildet oder softwaremäßig in der Prozeßsteuer- und/oder-regelvorrichtung (4, 31, 32) realisiert ist.

## Claims

1. Method of linking and interconnecting several welding devices, in particular several welding current sources, plasma current sources or similar, whereby, with every welding device operating individually, a process control and/or regulating system transmits desired values to a voltage-to-current controller of a power component and the power component supplies a consumer connected to output jacks with power (current/voltage) on the basis of the desired values, and the process control and/or regulating system can run a data exchange across an interface with another component, such as another welding device, a robot controller, a PC or laptop, etc., for example, and several welding devices (1, 27, 28) of the same and/or a different power rating or having the same and/or different output parameters, in particular machine specifications, are linked to one another on the secondary-side via the output jacks (38 to 43) to form a welding device (1, 27, 28) with a physically higher power output, and a process control and/or regulating system (4, 31, 32) of one welding device (1, 27, 28) assumes process control and all other process control and/or regulating systems (4, 31, 32) of the welding devices (1, 27, 28) are deactivated and the welding devices (1, 27, 28) with the deactivated process control and/or regulating systems (4, 31, 32) receive the desired values across the interface (44, 45, 46) and/or the connecting interface (47, 48, 49) from the process-controlling welding device (1, 27, 28), **characterised in that** the interconnected welding devices (1, 27, 28) are digitally interconnected via a digital interface (44, 45, 46) which is known per se and/or a special digital connecting interface (47, 48, 49) for a data exchange for control or regulation purposes, and the welding device (1, 27, 28) has an interrupter element (51, 52, 53) by means of which the process control and/or regulating system (4, 31, 32) is deactivated, and the interrupter element (51, 52, 53) is operated on the basis of software in the process control and/or regulating system (4, 31, 32), and when the interfaces (44, 45, 46) and/or the connecting interface (47, 48, 49) are activated by the interrupter element (51, 52, 53), data communication between the process control and/or regulating system (4, 31, 32) and an interface (33, 34, 35) and/or the power component (3, 29, 30) is disabled.

2. Method as claimed in claim 1, **characterised in that**, in order to minimise output current ripple and/or improve electromagnetic compatibility, the individual power components (3, 29, 30) are synchronised with one another at the same clock frequency via the interface (44, 45, 46) and/or via the connecting interface (47, 48, 49), the individual power components (3, 29, 30) being activated with a corresponding phase shift.

3. Method as claimed in claim 1 or 2, **characterised in that** the active process control and/or regulating system (4) does not detect the number of interconnected welding devices (1, 27, 28) and power components (3, 29, 30) but the sum of the achievable power, in particular the output voltage and/or the output current.

4. Method as claimed in one or more of the preceding claims, **characterised in that** the interconnected welding devices (1, 27, 28) are set up in a star circuit, triangular circuit or connected in parallel to an alternating and three-phase voltage supply, every welding device (1, 27, 28) preferably being set up as a single-phase alternating voltage device.

5. Method as claimed in one or more of the preceding claims, **characterised in that** the welding devices (1, 27, 28) are electromagnetically and/or electrically and/or optically and/or inductively linked on the control side.

6. Method as claimed in one or more of the preceding claims, **characterised in that** output jacks (38 to 43) of the power components (3, 29, 30) are connected to one another in parallel or in series via lines (54, 55) or welding lines (17, 18) depending on the required power output, at least two output jacks (38 to 43) being connected, in particular to a positive and a negative potential, to the consumer, in particular the welding torch (10).

7. Method as claimed in one or more of the preceding claims, **characterised in that** the activated process control and/or regulating system (4) can detect the power parameters of the power components (3, 29, 30) linked via the interface (44, 45, 46) and/or via the connecting interface (47, 48, 49) and thus divide the load or divide the power for the process control.

8. Method as claimed in one or more of the preceding claims, **characterised in that** safety values and/or control functions needed for a welding process and a current supply process, such as over-temperature, input voltage, over-current, etc., are monitored and operated by every welding device (1, 27, 28) independently.

9. Method as claimed in one or more of the preceding claims, **characterised in that** the data transmission between the individual welding devices (1, 27, 28) is run in two directions via the interface (44, 45, 46) and/or via the connecting interface (47, 48, 49).

10. Welding device, in particular a welding current source or plasma current source, consisting of at least one process control and/or regulating system and one power component, in which a voltage-to-current controller is integrated, and this welding device (1) can be connected to at least one other welding device (27, 28) of an equivalent configuration, whereby on the secondary side, the output jack (38 to 43) of the power component (3) of one welding device (1) can be connected to output jacks (38 to 43) of at least one other power component (29, 30) of another welding device (27, 28) with the same and/or a different power rating and having the same and/or different output parameters, in particular machine specifications, and a process control and/or regulating system (4) of one welding device (1) can be activated in order to control the process of all the interconnected welding devices (1, 27, 28) and all other process control and/or regulating systems (31, 32) of the welding devices (27, 28) can be deactivated, **characterised in that** the welding device (1, 27, 28) has at least one special digital connecting interface (47, 48, 49) or a digital interface (44, 45, 46) of a type that is known per se, to which the welding device (27, 28) can be connected and the welding device (1, 27, 28) has an interrupter element (51, 52, 53), by means of which the process control and/or regulating system (4, 31, 32) can be deactivated, and the interrupter element (51, 52, 53) is set up by means of software in the process control and/or regulating system (4, 31, 32), and when the interfaces (44, 45, 46) and/or the connecting interface (47, 48, 49) are activated by the interrupter element (51, 52, 53), data communication between the process control and/or regulating device (4, 31, 32) and an interface (33, 34, 35) and/or the power component (3, 29, 30) is disabled.

11. Welding device and current source as claimed in claim 10, **characterised in that** the output jacks (38 to 43) of the interconnected power components (3, 29, 30) are connected to one another in parallel and/or in series.

12. Welding device and current source as claimed in one of claims 10 or 11, **characterised in that** the interface (44, 45, 46) or the connecting interface (47, 48, 49) is linked to an interface (33, 34, 35) of a welding device (1, 27, 28).

13. Welding device and current source as claimed in one or more of claims 10 to 12, **characterised in that** the welding device (1, 27, 30) has a detection system for activating the interface (44, 45, 46) or the connecting interface (47, 48, 49).

14. Welding device and current source as claimed in one or more of claims 10 to 13, **characterised in that** the detection system (67, 68, 69) is provided in the form of an electromechanical switching mechanism or by a transponder system or by means of software in the process control and/or regulating system (4, 31, 32).

## Revendications

1. Procédé pour relier respectivement commuter ensemble plusieurs postes de soudage, en particulier plusieurs sources de courant de soudage, sources de courant de plasma ou analogue, où lors d'un fonctionnement individuel, dans chaque poste de soudage, un dispositif de commande de processus et/ou de réglage transmet des valeurs de consigne à un régulateur U/I d'une unité de puissance, et l'unité de puissance alimente conformément aux valeurs de consigne un utilisateur relié à des connecteurs de sortie en énergie (courant/tension), et le dispositif de commande de processus et/ou de réglage peut procéder par une interface avec un autre composant, comme par exemple un autre poste de soudage, une commande de robot, un PC ou un ordinateur portatif etc. à un échange de données, et plusieurs postes de soudage (1, 27, 28) de puissance identique et/ou différente respectivement ayant des paramètres de sortie identiques et/ou différents, en particulier des données caractéristiques de la machine, sont reliés côté secondaire par les connecteurs de sortie (38 à 43) pour former un poste de soudage (1, 27, 28) du point de vue physique d'une plus grande puissance, où un dispositif de commande de processus et/ou de réglage (4, 31, 32) d'un poste de soudage (1, 27, 28) prend en charge le réglage du processus et tous les autres dispositifs de commande de processus et/ou de réglage (4, 31, 32) des postes de soudage (1, 27, 28) sont désactivés, et les postes de soudage (1, 27, 28) avec les dispositifs de commande de processus et/ou de réglage désactivés (4, 31, 32) reçoivent les valeurs de consigne par l'interface (44, 45, 46) et/ou l'interface de liaison (47, 48, 49) du poste de soudage (1, 27, 28) réglant le processus, **caractérisé en ce que** pour la commande ou le réglage des postes de soudage (1, 27, 28) commutés ensemble, ceux-ci sont reliés entre eux numériquement par une interface numérique connue en soi (44, 45, 46) et/ou une interface de liaison numérique spéciale (47, 48, 49) pour un échange de données, et **en ce que** le poste de soudage (1, 27, 28) présente un élément d'interruption (51, 52, 53) au moyen duquel le dispositif de commande de processus et/ou de réglage (4, 31, 32) est désactivé, où l'élément d'interruption (51, 52, 53) est réalisé, quant au logiciel, dans le dispositif de commande de processus et/ou de réglage (4, 31, 32), et où lors de l'activation des interfaces (44, 45, 46) et/ou de l'interface de liaison (47, 48, 49) par l'élément d'interruption (51, 52, 53), la communication des données entre le dispositif de commande de processus et/ou de réglage (4,31, 32) et une interface (33, 34, 35) et/ou l'unité de puissance (3, 29, 30) est désactivée.

2. Procédé selon la revendication 1, **caractérisé en ce que** pour réduire à un minimum l'ondulation du courant de sortie et/ou pour améliorer la compatibilité électromagnétique, les unités de puissance individuelles (3, 29, 30) sont synchronisées avec la même fréquence de cycles par l'interface (44, 45, 46) et/ou par l'interface de liaison (47, 48, 49), où les unités de puissance individuelles (3, 29, 30) sont commandées avec un décalage de phase correspondant.

3. Procédé selon la revendication 1 ou 2, **caractérisé en ce que** le dispositif de commande de processus et/ou de réglage actif (4) détecte non pas le nombre des postes de soudage commutés ensemble (1, 27, 28) respectivement unités de puissance (3, 29, 30) mais la somme de l'énergie pouvant être atteinte, en particulier de la tension de sortie et/ou du courant de sortie.

4. Procédé selon l'une ou plusieurs des revendications précédentes, **caractérisé en ce que** les postes de soudage commutés ensemble (1, 27, 28) sont reliés selon un montage en étoile, un montage en triangle ou parallèlement à un réseau de tension alternative respectivement triphasé, où chaque poste de soudage (1, 27, 28) est réalisé de préférence comme appareil à tension alternative monophasé.

5. Procédé selon l'une ou plusieurs des revendications précédentes, **caractérisé en ce que** les postes de soudage (1, 27, 28) sont couplés côté commande d'une manière électromagnétique et/ou électrique et/ou optique et/ou inductive.

6. Procédé selon l'une ou plusieurs des revendications précédentes, **caractérisé en ce que** les connecteurs de sortie (38 à 43) des unités de puissance (3, 29, 30), selon la puissance requise, sont reliées entre elles par des lignes (54, 55) ou des lignes de soudage (17, 18) parallèlement ou en série, où est relié à au moins deux connecteurs de sortie (38 à 43), en particulier à un potentiel positif et un potentiel négatif, l'utilisateur, en particulier le chalumeau (10).

7. Procédé selon l'une ou plusieurs des revendications précédentes, **caractérisé en ce que** le dispositif de commande de processus et/ou de réglage activé (4) peut détecter les paramètres de puissance des unités de puissance (3, 29, 30) reliées par l'interface (44, 45, 46) ou par les interfaces de liaison (47, 48, 49) et ainsi, pour le réglage du processus, une répartition des charges respectivement répartition de puissance est exécutée.

8. Procédé selon l'une ou plusieurs des revendications précédentes, **caractérisé en ce que** les valeurs de sécurité et/ou fonctions de contrôle nécessaires pour un processus de soudage respectivement un processus d'alimentation en courant, comme par exemple la température supérieure, la tension initiale, le courant supérieur etc. sont surveillées respectivement effectuées par chaque poste de soudage (1, 27, 28) indépendamment.

9. Procédé selon l'une ou plusieurs des revendications précédentes, **caractérisé en ce que** la transmission des données entre les différents postes de soudage (1, 27, 28) a lieu d'une manière bidirectionnelle par l'interface (44, 45, 46) et/ou l'interface de liaison (47, 48, 49).

10. Poste de soudage, en particulier source de courant de soudage, ou source de courant de plasma, qui est constitué d'au moins un dispositif de commande de processus et/ou de réglage et d'une unité de puissance, dans laquelle est intégré un régulateur U/I, et ce poste de soudage (1) peut être relié, côté commande, à au moins un autre poste de soudage (27, 28) réalisé d'une manière équivalente, où côté secondaire, les connexions de sortie (38 à 43) de l'unité de puissance (3) d'un poste de soudage (1) peuvent être reliées aux connecteurs de sortie (38 à 43) d'au moins une autre unité de puissance (29, 30) d'un autre poste de soudage (27, 28) d'une puissance identique et/ou différente respectivement avec des paramètres de sortie identiques et/ou différents, en particulier des données caractéristiques de la machine, et en ce qu'un dispositif de commande de processus et/ou de réglage (4) d'un poste de soudage (1) peut être activé pour le réglage du processus de tous les postes de soudage commutés ensemble (1, 27, 28) et que tous les autres dispositifs de commande de processus et/ou de réglage (31, 32) des postes de soudage (27, 28) peuvent être désactivés, **caractérisé en ce que** le poste de soudage (1, 27, 28) présente au moins une interface de liaison numérique spéciale (47, 48, 49) ou une interface numérique connue (44, 45, 46) pour la connexion avec le poste de soudage (27, 28), et **en ce que** le poste de soudage (1, 27, 28) présente un élément d'interruption (51, 52, 53) au moyen duquel le dispositif de commande de processus et/ou de réglage (4, 31, 32) peut être désactivé, où l'élément d'interruption (51, 52, 53) est réalisé, côté logiciel, dans le dispositif de commande de processus et/ou de réglage (4, 31, 32), et où lors de l'activation des interfaces (44, 45, 46) et/ou de l'interface de liaison (47, 48, 49) par l'élément d'interruption (51, 52, 53), la communication des données entre le dispositif de processus de commande et/ou de réglage (4, 31, 32) et une interface (33, 34, 35) et/ou l'unité de puissance (3, 29, 30) peut être désactivée.

11. Poste de soudage respectivement source de courant selon la revendication 10, **caractérisé en ce que** les connecteurs de sortie (38 à 43) des unités de puissance commutées ensemble (3, 29, 30) sont commutés ensemble parallèlement et/ou en série.

12. Poste de soudage respectivement source de courant selon l'une des revendications 10 ou 11, **caractérisé en ce que** l'interface (44, 45, 46) ou l'interface de liaison (47, 48, 49) est reliée à une interface (33, 34, 35) d'un poste de soudage (1, 27, 28).

13. Poste de soudage respectivement source de courant selon l'une ou plusieurs des revendications 10 à 12, **caractérisé en ce que** le poste de soudage (1, 27, 30) présente un dispositif d'identification pour l'activation de l'interface (44, 45, 46) ou de l'interface de liaison (47, 48, 49).

14. Poste de soudage respectivement source de courant selon l'une ou plusieurs des revendications 10 à 13, **caractérisé en ce que** le dispositif d'identification (67, 68, 69) est formé par un dispositif de commutation électromécanique ou par un agencement de transpondeur ou est réalisé, en ce qui concerne le logiciel, dans le dispositif de commande de processus et/ou de réglage (4, 31, 32).
